# EUROPÄISCHE PATENTSCHRIFT

(11) **EP 2 215 385 B1**
(45) Veröffentlichungstag und Bekanntmachung des Hinweises auf die Patenterteilung: **17.02.2016**
(21) Anmeldenummer: 08857600.4
(22) Anmeldetag: 01.12.2008
(51) Int. Cl.: F16H 61/70, B60W 30/19, F16H 61/04, F16H 63/50, B60W 10/06, B60W 10/11, F16H 61/08

(54) **VERFAHREN ZUM BETREIBEN EINES ANTRIEBSSTRANGS EINES KRAFTFAHRZEUGS**
METHOD FOR OPERATING A DRIVETRAIN OF A MOTOR VEHICLE
PROCÉDÉ POUR FAIRE FONCTIONNER UNE CHAÎNE CINÉMATIQUE D'UN VÉHICULE AUTOMOBILE

(30) Priorität: 06.12.2007 DE 102007055720
(43) Veröffentlichungstag der Anmeldung: 11.08.2010
(73) Patentinhaber: ZF Friedrichshafen AG, 88038 Friedrichshafen (DE)
(72) Erfinder: STEINBORN, Mario, 88046 Friedrichshafen (DE); BREUER, Jochen, 88074 Meckenbeuren (DE)
(86) Internationale Anmeldenummer: PCT/EP2008/066489
(87) Internationale Veröffentlichungsnummer: WO 2009/071497

(56) Entgegenhaltungen:
- EP-A- 0 676 566
- EP-A- 0 896 172
- EP-A- 1 055 845
- US-A- 6 095 947

## Beschreibung

Die Erfindung betrifft ein Verfahren zum Betreiben eines einen Motor, ein Mehrgruppengetriebe und eine zwischen den Motor und das Mehrgruppengetriebe geschaltete Kupplung umfassenden Antriebsstrangs eines Kraftfahrzeugs, wobei das Mehrgruppengetriebe ein klauengeschaltetes Hauptgetriebe sowie mindestens eine synchronisierte Gruppe, nämlich eine synchronisierte Vorschaltgruppe und/oder eine synchronisierte Nachschaltgruppe, umfasst.

Soll an einem Mehrgruppengetriebe eines solchen Antriebsstrangs eines Kraftfahrzeugs eine Schaltung von einem Istgang in einen Sollgang durchgeführt werden, so erfolgt dies bei aus der Praxis bekannten Antriebssträngen derart, dass zur Ausführung der Schaltung von dem Istgang in den Sollgang die zwischen das Mehrgruppengetriebe und den Motor des Antriebsstrangs geschaltete Kupplung zumindest teilweise geöffnet und anschließend wieder geschlossen wird. Ferner kann, wenn eine synchronisierte Gruppe, also die synchronisierte Vorschaltgruppe oder die synchronisierte Nachschaltgruppe, des Mehrgruppengetriebes schaltet, das klauengeschaltete Hauptgetriebe in eine Neutralposition überführt werden. Durch die beim Schalten zumindest teilweise geöffnete Kupplung und das gegebenenfalls in die Neutralposition überführte klauengeschaltete Hauptgetriebe entstehen relativ lange Schaltzeiten. Ferner ergeben sich beim Lastabbau und/oder Öffnen des Antriebsstrangs über die Kupplung Komfortprobleme.

Hinsichtlich druckschriftlichen Standes der Technik, der die Ausführung von Schaltungen an einem Antriebsstrang mit einem Mehrgruppengetriebe offenbart, sei auf die DE 197 26 567 A1 sowie auf die EP 0 612 642 A1 verwiesen, bei welchen zur Ausführung einer Schaltung von einem Istgang in einen Sollgang stets die zwischen den Motor und das Mehrgruppengetriebe geschaltete Kupplung des Antriebsstrangs betätigt wird.

Das Dokument EP 0 896 172 A2 offenbart den nächstliegenden Stand der Technik mit den Merkmalen des Oberbegriffs der unabhängigen Ansprüche 1 und 7.

Hiervon ausgehend liegt der vorliegenden Erfindung das Problem zu Grunde ein neuartiges Verfahren zum Betreiben eines einen Motor, ein Mehrgruppengetriebe und eine zwischen den Motor und das Mehrgruppengetriebe geschaltete Kupplung umfassenden Antriebsstrangs zu schaffen, mit welchem schnelle Schaltungsabläufe realisiert werden können.

Dieses Problem wird nach einem ersten Aspekt der Erfindung durch ein Verfahren gemäß Anspruch 7 gelöst.

Hiernach wird ohne Betätigung der geschlossenen Kupplung eine Schaltung von einem Istgang in einen Sollgang ohne Betätigung des klauengeschalteten Hauptgetriebes ausschließlich durch Betätigung der synchronisierten Vorschaltgruppe oder der synchronisierten Nachschaltgruppe derart ausgeführt, dass: a) zuerst ein Motormoment abgebaut wird, wobei bei Erreichen oder Unterschreiten eines Grenzwerts des Motormoments die synchronisierte Vorschaltgruppe oder die synchronisierte Nachschaltgruppe Richtung Ausschalten bzw. Auslegen des auszulegenden Istgangs betätigt wird; b) darauffolgend dann, wenn das Motormoment in etwa Null beträgt, die synchronisierte Vorschaltgruppe oder die synchronisierte Nachschaltgruppe ausgeschaltet und in Neutralposition gebracht oder gehalten wird; c) anschließend der Motor auf eine Zieldrehzahl gebracht wird, die von dem einzulegenden Sollgang abhängig ist; d) darauffolgend dann, wenn der Motor die Zieldrehzahl mit einer definierten Toleranz erreicht, die synchronisierte Vorschaltgruppe oder die synchronisierte Nachschaltgruppe Richtung Einschalten bzw. Einlegen des einzulegenden Sollgangs betätigt wird; e) anschließend an das Einschalten der synchronisierten Vorschaltgruppe oder der synchronisierten Nachschaltgruppe das Motormoment wieder aufgebaut wird.

Nach dem ersten Aspekt der Erfindung wird dann, wenn bei der Betätigung der synchronisierten Vorschaltgruppe oder der synchronisierten Nachschaltgruppe Richtung Einschalten bzw. Einlegen des einzulegenden Sollgangs dieselbe eine sogenannte Zahn-auf-Zahn-Position einnimmt, das Motormoment bzw. die Motorlast trotzdem weiter aufgebaut und die synchronisierte Vorschaltgruppe oder die synchronisierte Nachschaltgruppe weiter Richtung Einschalten bzw. Einlegen des einzulegenden Sollgangs betätigt, um die Zahn-auf-Zahn-Position aufzulösen.

Nach einem zweiten Aspekt der Erfindung wird dieses Problem durch ein Verfahren gemäß Anspruch 1 gelöst.

Hiernach wird ohne Betätigung der geschlossenen Kupplung eine Schaltung von einem Istgang in einen Sollgang durch Betätigung des klauengeschalteten Hauptgetriebes und durch Betätigung einer synchronisierten Gruppe derart ausgeführt, dass: a) zuerst ein Motormoment abgebaut wird, wobei bei Erreichen oder Unterschreiten eines Grenzwerts des Motormoments das klauengeschaltete Hauptgetriebe und/oder die synchronisierte Gruppe Richtung Ausschalten bzw. Auslegen des auszulegenden Istgangs betätigt wird; b) darauffolgend dann, wenn das Motormoment in etwa Null beträgt, das klauengeschaltete Hauptgetriebe und die synchronisierte Gruppe ausgeschaltet werden, wobei die synchronisierte Gruppe in Neutralposition gebracht oder gehalten wird; c) anschließend der Motor auf eine Zieldrehzahl gebracht wird, die von dem einzulegenden Sollgang abhängig ist; d) darauffolgend dann, wenn der Motor die Zieldrehzahl mit einer definierten Toleranz erreicht, die synchronisierte Gruppe Richtung Einschalten bzw. Einlegen des Sollgangs betätigt wird, wobei hierbei eine Synchronisation der synchronisierten Gruppe erfolgt; e) darauffolgend dann, wenn die Synchronisation der synchronisierten Gruppe mit einer definierten Toleranz erfolgt ist, das klauengeschaltete Hauptgetriebe Richtung Einschalten bzw. Einlegen des Sollgangs betätigt wird; f) anschließend an das Einschalten des klauengeschalteten Hauptgetriebes und der synchronisierten Gruppe das Motormoment wieder aufgebaut wird.

Mit den erfindungsgemäßen Verfahren nach beiden Aspekten der hier vorliegenden Erfindung können schnelle Schaltungsabläufe an einem Mehrgruppengetriebe eines Antriebsstrangs realisiert werden. Bei beiden erfindungsgemäßen Verfahren erfolgt die Ausführung einer Schaltung von einem Istgang in einen Sollgang ohne Betätigung der zwischen das Mehrgruppengetriebe und den Motor des Antriebsstrangs geschalteten Kupplung. Schaltungen einer synchronisierten Gruppe, nämlich einer synchronisierten Vorschaltgruppe und/oder einer synchronisierten Nachschaltgruppe, werden in die Phasen Ausschalten bzw. Auslegen des Istgangs, Halten in Neutral, Synchronisieren und Einschalten bzw. Einlegen des Sollgangs unterteilt.

Schaltungen einer synchronisierten Gruppe werden demnach ohne Betätigung der Kupplung bei geschlossener Kupplung durchgeführt. Eine Synchronisierung der synchronisierten Gruppe erfolgt mit Hilfe des Motors. Dann, wenn eine Schaltung einer synchronisierten Gruppe mit einer Schaltung des klauengeschalteten Hauptgetriebes überlagert wird, erfolgt eine Synchronisierung des klauengeschalteten Hauptgetriebes über die synchronisierte Gruppe und den Motor. Es liegt demnach im Sinne der hier vorliegenden Erfindung, Schaltungen an einem Mehrgruppengetriebe ohne Betätigung der geschlossenen Kupplung, die zwischen das Mehrgruppengetriebe und den Antriebsmotor des Antriebsstrangs geschaltet ist, durchzuführen und die Schaltung einer synchronisierten Gruppe in die Phase Ausschalten, Halten in Neutral, Synchronisieren und Einschalten zu unterteilen. Eine synchronisierte Gruppe wird demnach prinzipiell wie das unsynchronisierte, klauengeschaltete Hauptgetriebe betätigt. Hiermit können schnelle Schaltungen bei hohem Schaltkomfort durchgeführt werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

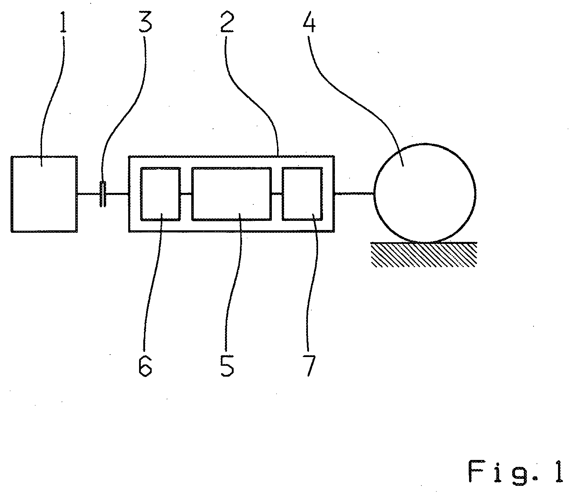

- Fig. 1: ein stark schematisiertes Antriebsstrangschema zur Verdeutlichung des erfindungsgemäßen Verfahrens zum Betreiben eines einen Motor, ein automatisiertes Schaltgetriebe und eine automatisierte Kupplung umfassenden Antriebsstrangs eines Kraftfahrzeugs.

Die hier vorliegende Erfindung betrifft ein Verfahren zum Betreiben eines einen Motor, ein Mehrgruppengetriebe und eine zwischen den Motor und das Mehrgruppengetriebe geschaltete Kupplung umfassenden Antriebsstrangs eines Kraftfahrzeugs.

Fig. 1 zeigt ein stark schematisiertes Antriebsstrangschema eines solchen Antriebsstrangs, wobei Fig. 1 den Motor 1, das Mehrgruppengetriebe 2, die zwischen den Motor 1 und das Mehrgrüppengetriebe 2 geschaltete Kupplung 3 und einen Abtrieb 4 zeigt. Das Mehrgruppengetriebe 2 umfasst ein Hauptgetriebe 5, eine Vorschaltgruppe 6 und eine Nachschaltgruppe 7. Beim Hauptgetriebe 5 handelt es sich um ein unsynchronisiertes, klauengeschaltetes Hauptgetriebe.

Bei der Vorschaltgruppe 6 und der Nachschaltgruppe 7 handelt es sich um synchronisierte Gruppen des Mehrgruppengetriebes 2. So kann es sich bei der Vorschaltgruppe 6 um eine Splittergruppe und bei der Nachschaltgruppe 7 um eine Rangegruppe handeln. Ebenso ist es möglich, dass es sich bei der Vorschaltgruppe 6 um eine Rangegruppe und bei der Nachschaltgruppe 7 um eine Splittergruppe handelt.

Obwohl dass in Fig. 1 dargestellte Mehrgruppengetriebe 2 neben den unsynchronisierten, klauengeschalteten Hauptgetriebe 5 zwei synchronisierten Gruppen 6 und 7 aufweist, ist die Erfindung auch bei solchen Antriebssträngen einsetzbar, die zusätzlich zum unsynchronisierten, klauengeschalteten Hauptgetriebe 5 entweder nur eine synchronisierte Vorschaltgruppe 6 oder nur eine synchronisierte Nachschaltgruppe 7 aufweisen.

Mit der Erfindung sollen nun an einem Mehrgruppengetriebe 2 eines solchen Antriebsstrangs schnelle Schaltungsabläufe bei hohem Schaltkomfort ausgeführt werden. Hierzu werden Schaltungen an einer synchronisierten Gruppe, also an der synchronisierten Vorschaltgruppe 6 und/oder an der synchronisierten Nachschaltgruppe 7, in mehrere Phasen unterteilt, nämlich in ein Ausschalten bzw. Auslegen eines Istgangs, Halten in Neutral, Synchronisieren und Einschalten bzw. Einlegen eines Sollgangs.

Nach einem ersten Aspekt der hier vorliegenden Erfindung wird eine Schaltung von einem Istgang in einen Sollgang an einem Mehrgruppengetriebe 2 ohne Betätigung der geschlossenen Kupplung 3 und ohne Betätigung des klauengeschalteten Hauptgetriebes 5 ausschließlich durch Betätigung der synchronisierten Vorschaltgruppe 6 oder der synchronisierten Nachschaltgruppe 7 derart ausgeführt, dass zuerst eine Motorlast bzw. ein Motormoment abgebaut wird, wobei bei Erreichen oder Unterschreiten eines Grenzwerts für die Motorlast bzw. das Motormoment die synchronisierte Vorschaltgruppe 6 oder die synchronisierte Nachschaltgruppe 7 Richtung Ausschalten bzw. Auslegen des auszulegenden Istgangs betätigt wird. Darauffolgend wird dann, wenn die Motorlast bzw. das Motormoment in etwa Null beträgt, die synchronisierte Vorschaltgruppe 6 oder die synchronisierte Nachschaltgruppe 7 ausgeschaltet und in eine Neutralposition gebracht bzw. in derselben gehalten, wobei hierbei ein Synchronisieren der synchronisierten Vorschaltgruppe 6 oder der synchronisierten Nachschaltgruppe 7 unterbunden bzw. abgebrochen wird. Anschließend hieran wird der Motor auf eine Zieldrehzahl gebracht, die von dem einzulegenden Sollgang abhängig ist. Die Zieldrehzahl, auf die der Motor gebracht wird, entspricht entweder einer Sollgang-Zieldrehzahl oder dieselbe liegt oberhalb oder unterhalb der Sollgang-Zieldrehzahl. Die Zieldrehzahl, auf die der Motor gebracht wird, kann abhängig vom Aufbau der Synchronisierung der synchronisierten Vorschaltgruppe 6 oder der synchronisierten Nachschaltgruppe 7 sein. Dann, wenn der Motor die Zieldrehzahl mit einer definierten Toleranz erreicht, wird die synchronisierte Vorschaltgruppe 6 oder die synchronisierte Nachschaltgruppe 7 Richtung Einschalten bzw. Einlegen des einzulegenden Sollgangs betätigt, wobei hierbei eine Synchronisierung der synchronisierten Vorschaltgruppe 6 oder der synchronisierten Nachschaltgruppe 7 über den Motor 1 erfolgt. Anschließend an das Einschalten der synchronisierten Vorschaltgruppe 6 oder der synchronisierten Nachschaltgruppe 7 wird das Motormoment bzw. die Motorlast wieder aufgebaut bzw. aufgeschaltet.

Dann, wenn bei der Betätigung der synchronisierten Vorschaltgruppe 6 oder der synchronisierten Nachschaltgruppe 7 Richtung Einschalten bzw. Einlegen des einzulegenden Sollgangs dieselbe eine sogenannte Zahn-auf-Zahn-Position einnimmt, wird das Motormoment bzw. die Motorlast trotzdem weiter aufgebaut und die synchronisierte Vorschaltgruppe 6 oder die synchronisierte Nachschaltgruppe 7 weiter Richtung Einschalten bzw. Einlegen Richtung des einzulegenden Sollgangs betätigt, um die Zahn-auf-Zahn-Position aufzulösen. Hierbei kann die Aufschaltung der Motorlast bzw. des Motormoments zur besseren und sicheren Auflösung der Zahn-auf-Zahn-Position, angepasst erfolgen.

Nach dem ersten Aspekt der hier vorliegenden Erfindung wird demnach eine Schaltung in dem Mehrgruppengetriebe 2 bei unbetätigter, geschlossener Kupplung 3 und unbetätigtem, klauengeschaltetem Hauptgetriebe 5 ausschließlich durch Betätigung der synchronisierten Vorschaltgruppe 6 oder der synchronisierten Nachschaltgruppe 7 ausgeführt, wobei die Synchronisierung der synchronisierten Vorschaltgruppe 6 oder synchronisierten Nachschaltgruppe 7 über den Motor 1 erfolgt. Bei der betätigten synchronisierten Gruppe handelt es sich vorzugsweise um eine Splittergruppe.

Bei einem erfindungsgemäßen Verfahren nach einem zweiten Aspekt der hier vorliegenden Erfindung erfolgt eine Schaltung von einem Istgang in einem Sollgang ebenfalls ohne Betätigung der geschlossenen Kupplung 3 jedoch unter Betätigung des unsynchronisierten, klauen geschalteten Hauptgetriebes 5 und durch Betätigung einer synchronisierten Gruppe 6 bzw. 7, wobei hierzu wiederum zuerst eine Motorlast bzw. ein Motormoment abgebaut wird, wobei bei Erreichen oder Unterschreiten eines Grunzwerts der Motorlast bzw. des Motormoments das klauengeschaltete, unsynchronisierte Hauptgetriebe 5 und/oder die synchronisierte Gruppe 6 bzw. 7 Richtung Ausschalten bzw. Auslegen des auszulegenden Istgangs betätigt wird.

Darauffolgend werden dann, wenn das Motormoment bzw. die Motorlast in etwa Null beträgt, sowohl das klauengeschaltete Hauptgetriebe 5 als auch die synchronisierte Gruppe 6 bzw. 7 ausgeschaltet, wobei die synchronisierte Gruppe 6 bzw. 7 in eine Neutralposition gebracht oder in derselben gehalten wird. Hierbei wird ein Synchronisieren der synchronisierten Gruppe 6 bzw. 7 unterbunden bzw. abgebrochen. Bei Bedarf wird auch das unsynchronisierte, klauengeschaltete Hauptgetriebe 5 in eine Neutralposition gebracht bzw. in derselben gehalten. Anschließend wird der Motor 1 auf eine Zieldrehzahl gebracht, die von dem einzulegenden Sollgang abhängig ist, wobei die Zieldrehzahl, auf die der Motor 1 gebracht wird, einer Sollgang-Zieldrehzahl entspricht oder oberhalb bzw. unterhalb der Sollgang-Zieldrehzahl liegt. Die Zieldrehzahl, auf die der Motor gebracht wird, kann abhängig vom Aufbau der Synchronisierung sein.

Darauffolgend wird dann, wenn der Motor 1 die Zieldrehzahl mit einer definierten Toleranz erreicht hat, die synchronisierte Gruppe 6 bzw. 7 Richtung Einschalten bzw. Einlegen des einzulegenden Sollgangs betätigt, wobei hierbei eine Synchronisation der synchronisierten Gruppe 6 bzw. 7 erfolgt. Hiermit beginnt demnach die Synchronisation der synchronisierten Gruppe 6 bzw. 7, wobei eine gleichzeitige Synchronisation der synchronisierten Gruppe 6 bzw. 7 und des unsynchronisierten, klauengeschalteten Hauptgetriebes 5 erfolgt. Darauffolgend wird dann, wenn die Synchronisation der synchronisierten Gruppe 6 bzw. 7 mit einer definierten Toleranz, z. B. einer definierten Drehzahltoleranz und/oder Zeittoleranz, erfolgt ist, dass unsynchronisierte, klauengeschaltete Hauptgetriebe 5 Richtung Einschalten bzw. Einlegen des einzulegenden Sollgangs betätigt. Jetzt sind sowohl die synchronisierte Gruppe 6 bzw. 7 als auch das klauengeschaltete Hauptgetriebe 5 beim Einschalten bzw. Einlegen des Sollgangs. Anschließend an das Einschalten der synchronisierten Gruppe 6 bzw. 7 und des klauengeschalteten Hauptgetriebes 5 wird das Motormoment bzw. die Motorlast wieder aufgebaut bzw. aufgeschaltet.

Dann, wenn beim Aufbauen bzw. Aufschalten des Motormoments bzw. Motorlast die synchronisierte Gruppe 6 bzw. 7 und/oder das klauengeschaltete, unsynchronisierte Hauptgetriebe 5 eine Zahn-auf-Zahn-Position einnehmen, wird das Motormoment bzw. die Motorlast trotzdem weiter aufgebaut und die synchronisierte Gruppe 6 bzw. 7 und/oder das klauen geschaltete Hauptgetriebe 5 werden weiter Richtung Einschalten bzw. Einlegen des einzulegenden Sollgangs betätigt, um die Zahn-auf-Zahn-Position aufzulösen. Zur besseren bzw. sichereren Auflösung der Zahn-auf-Zahn-Position kann die Aufschaltung des Motormoments bzw. der Motorlast auf die synchronisierte Gruppe 6 bzw. 7 und/oder das klauengeschaltete Hauptgetriebe 5 angepasst erfolgen.

Mit Hilfe der erfindungsgemäßen Verfahren können schnelle Schaltungen bei hohem Schaltkomfort ausgeführt werden. Insbesondere dann, wenn nur eine synchronisierte Gruppe des Mehrgruppengetriebes betätigt wird, wird durch die Motorsynchronisation die synchronisierte Gruppe weniger stark belastet. Vor allem bei Kälte wird hierdurch die Synchronisation unterstützt bzw. vereinfacht.

### Bezugszeichen

- 1: Motor
- 2: Mehrgruppengetriebe
- 3: Kupplung
- 4: Abtrieb
- 5: Hauptgetriebe
- 6: Vorschaltgruppe
- 7: Nachschaltgruppe

## Patentansprüche

1. Verfahren zum Betreiben eines einen Motor, ein Mehrgruppengetriebe und eine zwischen den Motor und das Mehrgruppengetriebe geschaltete Kupplung umfassenden Antriebsstrangs eines Kraftfahrzeugs, wobei das Mehrgruppengetriebe ein klauengeschaltetes Hauptgetriebe sowie mindestens eine synchronisierte Gruppe, nämlich eine synchronisierte Vorschaltgruppe und/oder eine synchronisierte Nachschaltgruppe, umfasst, wobei ohne Betätigung der geschlossenen Kupplung eine Schaltung von einem Istgang in einen Sollgang durch Betätigung des klauengeschalteten Hauptgetriebes und durch Betätigung einer synchronisierten Gruppe derart ausgeführt wird, dass:
a) zuerst ein Motormoment abgebaut wird, wobei bei Erreichen oder Unterschreiten eines Grenzwerts des Motormoments das klauengeschaltete Hauptgetriebe und/oder die synchronisierte Gruppe Richtung Ausschalten bzw. Auslegen des auszulegenden Istgangs betätigt wird;
b) darauffolgend dann, wenn das Motormoment in etwa Null beträgt, das klauengeschaltete Hauptgetriebe und die synchronisierte Gruppe ausgeschaltet werden, wobei die synchronisierte Gruppe in Neutralposition gebracht oder gehalten wird;
c) anschließend der Motor auf eine Zieldrehzahl gebracht wird, die von dem einzulegenden Sollgang abhängig ist;
d) darauffolgend dann, wenn der Motor die Zieldrehzahl mit einer definierten Toleranz erreicht, die synchronisierte Gruppe Richtung Einschalten bzw. Einlegen des einzulegenden Sollgangs betätigt wird, wobei hierbei eine Synchronisation der synchronisierten Gruppe erfolgt;
e) darauffolgend dann, wenn die Synchronisation der synchronisierten Gruppe mit einer definierten Toleranz erfolgt ist, das klauengeschaltete Hauptgetriebe Richtung Einschalten bzw. Einlegen des einzulegenden Sollgangs betätigt wird;
f) anschließend an das Einschalten des klauengeschalteten Hauptgetriebes und der synchronisierten Gruppe das Motormoment wieder aufgebaut wird.

2. Verfahren nach Anspruch 1, **dadurch gekennzeichnet, dass** in Schritt b) ein Synchronisieren der synchronisierten Gruppe unterbunden bzw. abgebrochen wird.

3. Verfahren nach Anspruch 1 oder 2, **dadurch gekennzeichnet, dass** in Schritt b) das klauengeschaltete Hauptgetriebe in Neutralposition gebracht oder gehalten wird.

4. Verfahren nach einem der Anspruche 1 bis 3, dadurch **gekenn-eichnet,** dass in Schritt c) die Zieldrehzahl, auf die der Motor gebracht wird, einer Sollgang-Zieldrehzahl entspricht oder oberhalb der Sollgang-Zietdrehzahf oder unterhalb der Sollgang-Zieldrehzahl liegt.

5. Verfahren nach einem der Ansprüche 1 bis 4, **dadurch gekennzeichnet, dass** in Schritt d) eine gleichzeitige Synchronisation der synchronisierten Gruppe und des klauengeschaltete Hauptgetriebes erfolgt.

6. Verfahren nach einem der Ansprüche 1 bis 5, **dadurch gekennzeichnet, dass** dann, wenn in Schritte d) und/oder in Schritt e) die synchronisierte Gruppe und/oder das klauengeschaltete Hauptgetriebe eine Zahn-Auf-Zahn-Position einnimmt, das Motormoment trotzdem weiter aufgebaut wird und die synchronisierte Gruppe und/oder das klauengeschaltete Hauptgetriebe weiter Richtung Einschalten bzw. Einlegen des einzulegenden Sollgangs betätigt wird.

7. Verfahren zum Betreiben eines einen Motor, ein Mehrgruppengetriebe und eine zwischen den Motor und das Mehrgruppengetriebe geschaltete Kupplung umfassenden Antriebsstrangs eines Kraftfahrzeugs, wobei das Mehrgruppengetriebe ein kläuengeschaltetes Hauptgetriebe sowie eine synchronisierte Vorschaltgruppe und/oder eine synchronisierte Nachschaltgruppe umfasst, wobei ohne Betätigung der geschlossenen Kupplung eine Schaltung von einem Istgang in einen Sollgang ohne Betätigung des klauengeschalteten Hauptgetriebes ausschließlich durch Betätigung der synchronisierten Vorschaltgruppe oder der synchronisierten Nachschaltgruppe derart ausgeführt wird, dass:
a) zuerst ein Motormoment abgebaut wird, wobei bei Erreichen oder Unterschreiten eines Grenzwerts des Motormoments die synchronisierte Vorschaltgruppe oder die synchronisierte Nachschaltgruppe Richtung Ausschalten bzw. Auslegen des auszulegenden Istgangs betätigt wird;
b) darauffolgend dann, wenn das Motormoment in etwa Null beträgt, die synchronisierte Vorschaltgruppe oder die synchronisierte Nachschaltgruppe ausgeschaltet und in Neutralposition gebracht oder gehalten wird;
c) anschließend der Motor auf eine Zieldrehzahl gebracht wird, die von dem einzulegenden Sollgang abhängig ist;
d) darauffolgend dann, wenn der Motor die Zieldrehzahl mit einer definierten Toleranz erreicht, die synchronisierte Vorschaltgruppe oder die synchronisierte Nachschaltgruppe Richtung Einschalten bzw. Einlegen des einzuliegenden Sollgangs betätigt wird, wobei dann, wenn die synchronisierte Vorschaltgruppe oder die synchronisierte Nachschaltgruppe eine Zahn-Auf-Zahn-Position einnimmt, das Motormoment trotzdem weiter aufgebaut wird und die synchronisierte Vorschaltgruppe oder die synchronisierte Nachschaltgruppe weiter Richtung Einschalten bzw. Einlegen des einzulegenden Sollgangs betätigt wird.
e) anschließend an das Einschalten der synchronisierten Vorschaltgruppe oder der synchronisierten Nachschaltgruppe das Motormoment wieder aufgebaut wird.

8. Verfahren nach Anspruch 7, **dadurch gekennzeichnet, dass** in Schritt b) ein Synchronisieren der synchronisierten Vorschaltgruppe oder der synchronisierten Nachschaltgruppe unterbunden bzw. abgebrochen wird.

9. Verfahren nach Anspruch 7 oder 8, **dadurch gekennzeichnet, dass** in Schritt c) die Zieldrehzahl, auf die der Motor gebracht wird, einer Sollgang-Zieldrehzahl entspricht oder oberhalb der Sollgang-Zieldrehzahl oder unterhalb der Sollgang-Zieldrehzahl liegt.

## Claims

1. Method for operating a drivetrain of a motor vehicle, comprising an engine, a multi-group transmission and a clutch connected between the engine and the multi-group transmission, wherein the multi-group transmission comprises a claw-shifted main transmission as well as at least one synchronized group, specifically a synchronized upstream group and/or a synchronized downstream group, wherein a switch from a natural gearspeed into a target gearspeed is carried out without activating the closed clutch, by activating the claw-shifted main transmission and by activating a synchronized group, in such a way that:
a) firstly an engine torque is decreased, wherein when a limiting value of the engine torque is reached or undershot, the claw-shifted main transmission and/or the synchronized group is activated in the direction of switching off or disengaging the actual gearspeed which is to be disengaged;
b) subsequently when the engine torque is approximately zero, the claw-shifted main transmission and the synchronized group are switched off, wherein the synchronized group is moved into the neutral position or held therein;
c) the engine is subsequently adjusted to a target rotational speed which is dependent on the target gear to be engaged;
d) subsequently when the engine reaches the target rotational speed with a defined tolerance, the synchronized group is activated in the direction of switching on or engaging the target gear which is to be engaged, wherein synchronization of the synchronized group takes place in the process;
e) subsequently when the synchronization of the synchronized group has taken place with a defined tolerance, the claw-shifted main transmission is activated in the direction of switching on or engaging the target gear which is to be engaged;
f) subsequent to the switching on of the claw-shifted main transmission and of the synchronized group, the engine torque is increased again.

2. Method according to Claim 1, **characterized in that** in step b) synchronization of the synchronized group is prohibited or aborted.

3. Method according to Claim 1 or 2, **characterized in that** in step b) the claw-shifted main transmission is moved into the neutral position or held therein.

4. Method according to one of Claims 1 to 3, **characterized in that** in step c) the target rotational speed to which the engine is adjusted corresponds to a target rotational speed of a target gear or is above the target rotational speed of the target gear or below the target rotational speed of the target gear.

5. Method according to one of Claims 1 to 4, **characterized in that** in step d) simultaneous synchronization of the synchronized group and the claw-shifted main transmission takes place.

6. Method according to one of Claims 1 to 5, **characterized in that** when in step d) and/or in step e) the synchronized group and/or the claw-shifted main transmission assumes a tooth-on-tooth position, the engine torque is nevertheless increased further and the synchronized group and/or the claw-shifted main transmission is activated further in the direction of switching on or engaging the target gear which is to be engaged.

7. Method for operating a drivetrain of a motor vehicle, comprising an engine, a multi-group transmission and a clutch connected between the engine and the multi-group transmission, wherein the multi-group transmission comprises a claw-shifted main transmission as well as a synchronized upstream group and/or a synchronized downstream group, wherein a switch from a natural gearspeed into a target gearspeed is carried out without activating the closed clutch, without activating the claw-shifted main transmission, exclusively by activating the synchronized upstream group or the synchronized downstream group, in such a way that:
a) firstly an engine torque is decreased, wherein when a limiting value of the engine torque is reached or undershot, the synchronized upstream group or the synchronized downstream group is activated in the direction of switching off or disengaging the actual gearspeed which is to be disengaged;
b) subsequently when the engine torque is approximately zero, the synchronized upstream group or the synchronized downstream group is switched off and moved into the neutral position or held therein;
c) the engine is subsequently adjusted to a target rotational speed which is dependent on the target gear to be engaged;
d) subsequently when the engine reaches the target rotational speed with a defined tolerance, the synchronized upstream group or the synchronized downstream group is activated in the direction of switching on or engaging the target gear which is to be engaged, wherein when the synchronized upstream group or the synchronized downstream group assumes a tooth-on-tooth position, the engine torque is nevertheless increased further and the synchronized upstream group or the synchronized downstream group continues to be activated in the direction of switching on or engaging the target gear which is to be engaged;
e) subsequent to the switching on of the synchronized upstream group or the synchronized downstream group, the engine torque is increased again.

8. Method according to Claim 7, **characterized in that** in step b) synchronization of the synchronized upstream group or of the synchronized downstream group is prohibited or aborted.

9. Method according to Claim 7 or 8, **characterized in that** in step c) the target rotational speed to which the engine is adjusted corresponds to a target rotational speed of a target gear or is above the target rotational speed of the target gear or below the target rotational speed of the target gear.

## Revendications

1. Procédé de conduite du train d'entraînement d'un véhicule automobile,
le train d'entraînement comprenant un moteur, une transmission à plusieurs groupes et un embrayage raccordé entre le moteur et la transmission à plusieurs groupes,
la transmission à plusieurs groupes comprenant une transmission principale commutée par griffe ainsi qu'au moins un groupe synchronisé, à savoir un groupe de pré-commutation synchronisée et/ou un groupe de post-commutation synchronisée,
une commutation d'un rapport en cours à un rapport de consigne étant réalisée sans actionnement de l'embrayage fermé par actionnement de la transmission principale commutée par griffe et par actionnement d'un groupe synchronisé, de telle sorte que :
a) un couple moteur est d'abord supprimé, et lorsqu'une valeur limite du couple moteur est atteinte ou n'est plus atteinte, la transmission principale commutée par griffe et/ou le groupe synchronisé sont actionnés en direction du débranchement ou de la sortie hors du rapport effectif duquel il faut sortir,
b) ensuite, lorsque le couple moteur vaut sensiblement zéro, la transmission principale commutée par griffe et le groupe synchronisé sont débranchés, le groupe synchronisé étant amené en position neutre ou y étant maintenu,
c) ensuite, le moteur est amené à une vitesse de rotation cible qui dépend du rapport de consigne qui doit être établi,
d) ensuite, lorsque le moteur a atteint la vitesse de rotation cible avec une tolérance définie, le groupe synchronisé est actionné en direction du branchement ou de l'établissement du rapport de consigne à établir, une synchronisation du groupe synchronisé ayant alors lieu,
e) ensuite, lorsque la synchronisation du groupe synchronisé a été réalisée à une tolérance définie, la transmission principale commutée par griffe est actionnée en direction du branchement ou de l'établissement du rapport de consigne à établir, et
f) après le branchement de la transmission principale commutée par griffe et du groupe synchronisé, le couple moteur est de nouveau établi.

2. Procédé selon la revendication 1, **caractérisé en ce qu'**à l'étape b), une synchronisation du groupe synchronisé est empêchée ou interrompue.

3. Procédé selon les revendications 1 ou 2, **caractérisé en ce qu'**à l'étape b), la transmission principale commutée par griffe est amenée ou maintenue en position neutre.

4. Procédé selon l'une des revendications 1 à 3, **caractérisé en ce qu'**à l'étape c), la vitesse de rotation cible à laquelle le moteur est amené correspond à une vitesse de rotation cible dans le rapport de consigne ou est située au-dessus de la vitesse de rotation cible du rapport de consigne ou en dessous de la vitesse de rotation cible du rapport de consigne.

5. Procédé selon l'une des revendications 1 à 4, **caractérisé en ce qu'**à l'étape d), une synchronisation simultanée du groupe synchronisé et de la transmission principale commutée par griffe a lieu.

6. Procédé selon l'une des revendications 1 à 5, **caractérisé en ce que** si à l'étape d) et/ou à l'étape e), le groupe synchronisé et/ou la transmission principale commutée par griffe prennent une position dent sur dent, le couple continue malgré cela d'être établi et le groupe synchronisé et/ou la transmission principale commutée par griffe sont encore actionnés en direction du branchement ou de l'établissement du rapport de consigne à établir.

7. Procédé de conduite du train d'entraînement d'un véhicule automobile,
le train d'entraînement comprenant un moteur, une transmission à plusieurs groupes et un embrayage raccordé entre le moteur et la transmission à plusieurs groupes,
la transmission à plusieurs groupes comprenant une transmission principale commutée par griffe ainsi qu'au moins un groupe de pré-commutation synchronisée et/ou un groupe de post-commutation synchronisée,
une commutation d'un rapport en cours à un rapport de consigne étant réalisée sans actionnement de l'embrayage fermé, sans actionnement de la transmission principale commutée par griffe et exclusivement par actionnement du groupe de pré-commutation synchronisée ou un groupe de post-commutation synchronisée, de telle sorte que :
a) un couple moteur est d'abord supprimé, et lorsqu'une valeur limite du couple moteur est atteinte ou n'est plus atteinte, le groupe de pré-commutation synchronisée ou le groupe de post-commutation synchronisée sont actionnés en direction du débranchement ou de la sortie hors du rapport effectif duquel il faut sortir,
b) ensuite, lorsque le couple moteur vaut sensiblement zéro, le groupe de pré-commutation synchronisée ou le groupe de post-commutation synchronisée sont débranchés et amenés en position neutre ou y sont maintenus,
c) ensuite, le moteur est amené à une vitesse de rotation cible qui dépend du rapport de consigne qui doit être établi,
d) ensuite, lorsque le moteur a atteint la vitesse de rotation cible avec une tolérance définie, le groupe de pré-commutation synchronisée ou le groupe de post-commutation synchronisée sont actionnés en direction du branchement ou de l'établissement du rapport de consigne à établir, et si le groupe de pré-commutation synchronisée ou le groupe de post-commutation synchronisée prennent une position dent sur dent, le couple moteur continue malgré tout d'être établi et le groupe de pré-commutation synchronisée ou le groupe de post-commutation synchronisée sont encore actionnés en direction du branchement ou de l'établissement du rapport de consigne à établir et
e) après le branchement du groupe de pré-commutation synchronisée ou du groupe de post-commutation synchronisée, le couple moteur est de nouveau établi.

8. Procédé selon la revendication 7, **caractérisé en ce qu'**à l'étape b), la synchronisation du groupe de pré-commutation synchronisée ou du groupe de post-commutation synchronisée est empêchée ou interrompue.

9. Procédé selon les revendications 7 ou 8, **caractérisé en ce qu'**à l'étape c), la vitesse de rotation cible à laquelle le moteur est amené correspond à une vitesse de rotation cible dans le rapport de consigne ou est située au-dessus de la vitesse de rotation de consigne du rapport de consigne ou en dessous de la vitesse de rotation cible du rapport de consigne.
